# EUROPEAN PATENT APPLICATION

(11) **EP 2 241 490 A2**
(43) Date of publication of application: **20.10.2010**
(21) Application number: 10159941.3
(22) Date of filing: 14.04.2010
(51) Int. Cl.: B62B 3/02

(54) **Shopping cart**

(30) Priority: 15.04.2009 ES 200930028 U
(71) Applicant: Garcia Moll, Jaime, 03700 Denia (ES)
(72) Inventor: Garcia Moll, Jaime, 03700 Denia (ES)
(74) Representative: Sanz-Bermell Martinez, Alejandro

(57) **Abstract**

The shopping trolley is able to hold a shopping bag, which is fitted with a frame (1) in which the other items are fitted, and which comprises at least a support for rear wheels (7) which can be folded up onto said frame (1), a support platform for the bag (4), that can also fold up onto said frame, and a support section (5) for front wheels (8) also foldable onto the frame (1) on which this is articulated, being the front wheels (6) set centred under this support section, and having their rotation axis (16) a variable position.

## Description

This invention refers to a shopping trolley consisting of a frame handle that can be folded up on itself, a foldable bag support, as well as different supports for front and rear wheels that are also foldable.

### Background and state of the art

Shopping trolleys holding a bag have been known of for a long time. There are trolleys of this kind which form a rigid frame fitted with two or more wheels and a front projection, normally "U" shaped, which forms the trolley support at the front. This kind of trolley can already be seen in ES U 0127367.

Nevertheless, houses have gradually dropped in size over time, which is why it has become essential for shopping trolleys to be able to be folded up to be put away in a cupboard or some other suitable space for this purpose, using as little space as possible.

Another example of the trolley can be seen in ES U 0131601, in which the handle is also foldable. An example similar to the previous one, but in which the handle extends by sliding out in parallel, can be found in ES U 0133683. ES U 0138315 describes a trolley fitted with a foldable front support and a handle that is extendible by sliding out telescopically.

ES U 0237153 discloses a shopping trolley with two wheels in which both the base and the handle can be folded down.

Handling a shopping trolley as described in this background is nevertheless not convenient since it cannot be pulled along unless the support zone is lifted up by the user's action on the handle.

ES U 0237231 discloses a four-wheel trolley, fitted with a rigid base on which the handle and support for the trolley bag are secured. ES U 0237155 discloses a four-wheel trolley with rear support folding down on the trolley structure. ES U 1 017 594 describes a shopping trolley in which the rear support is folded down onto the structure of the trolley this time by means of an snap-fit anchorage with no securing braces.

ES U 1 025 909 discloses a bag-carrying trolley for shopping, fitted with four wheels, which includes a folding wheel-holding structure and a rear tray, also folding down.

ES U 1 066 018 discloses a bag-carrying trolley in which both the support of the front wheels and the support of the rear wheels folds down in respect of a horizontal axis, as well as the bag carrier tray.

### Description of the invention

This invention, as was stated in the heading of this description, consists of a shopping trolley which comprises a handle frame that folds up on itself by being articulated to a securing piece, which includes a support for rear wheels that folds in respect of the frame from an open position, away from this frame, to a closed position, in which the wheels are set approximately at the end of said frame, as well as a support for the bag that folds up in respect of the frame, to remain against said frame in folded position at the top of the rotation axis, as well as a front support, holding wheels or pairs of wheels, this front support being able to rotate in respect of an eccentric vertical axis, and this front support being foldable in respect of a horizontal axis. Said trolley has four or preferably six wheels in the event of the front wheels being configured as parallel wheels with a single rotation axis.

### Brief description of the figures

In order to illustrate the following explanation we are adjoining five sheets of drawings to this descriptive report, in which eight figures represent the essence of this invention as an example, and in which:

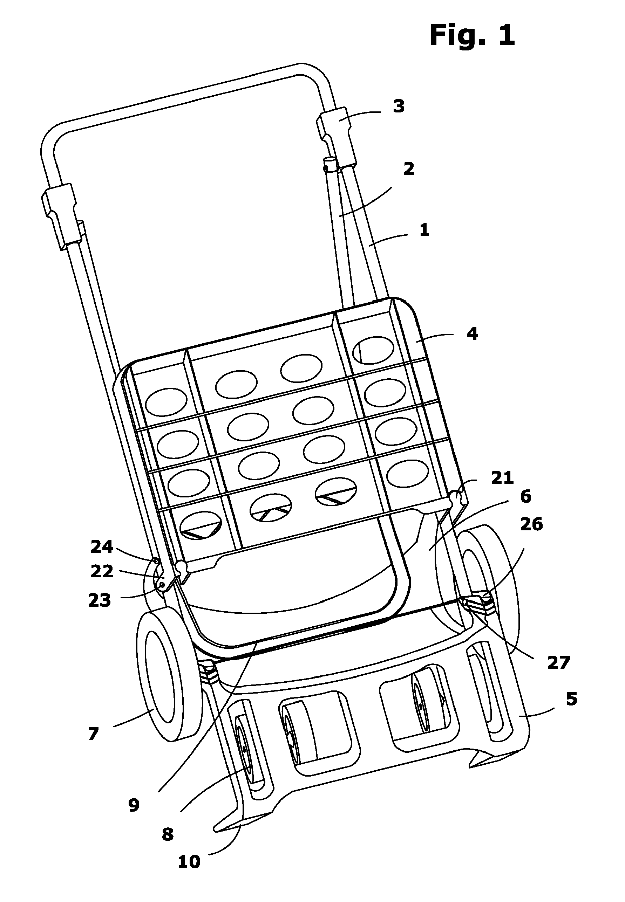

- Figure 1: shows a schematic view in perspective of the trolley described in the invention in its fully folded position;

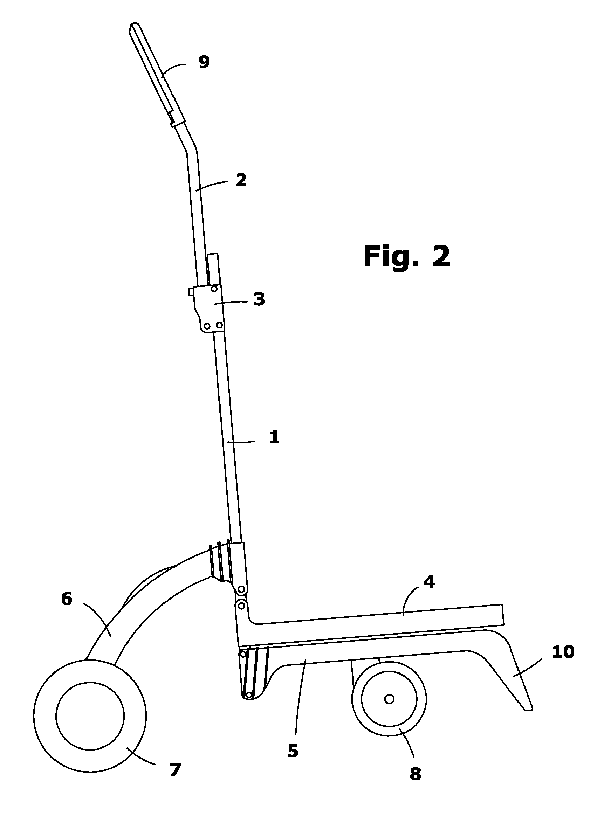

- Figure 2: shows a schematic side view of the trolley described in the invention in its unfolded position;

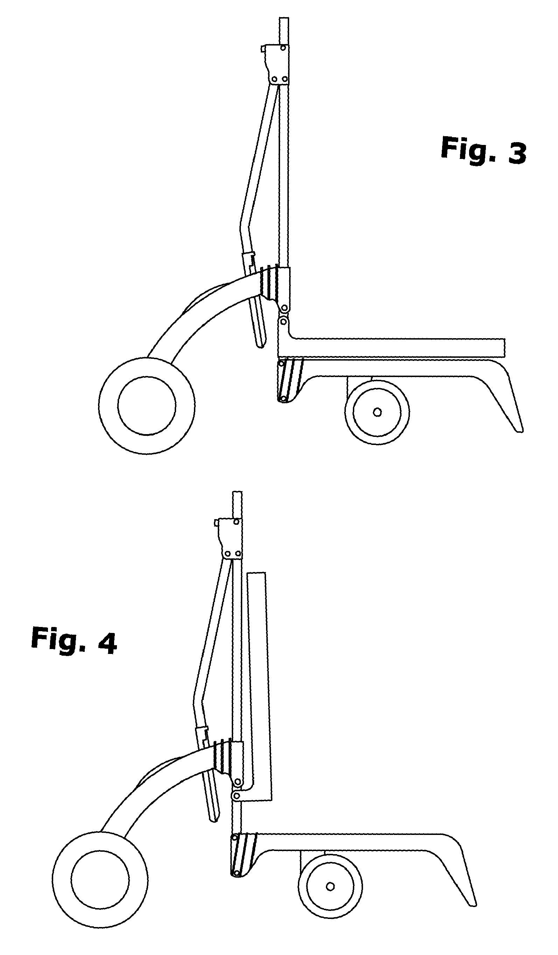

- Figure 3: shows a schematic side view of the trolley, like the one in Figure 2, but in a first stage in which the handle has been folded;
- Figure 4: shows a schematic side view of the trolley, similar to that of Figure 3, but in a second stage in which the bag support has also been folded on the frame that supports this;

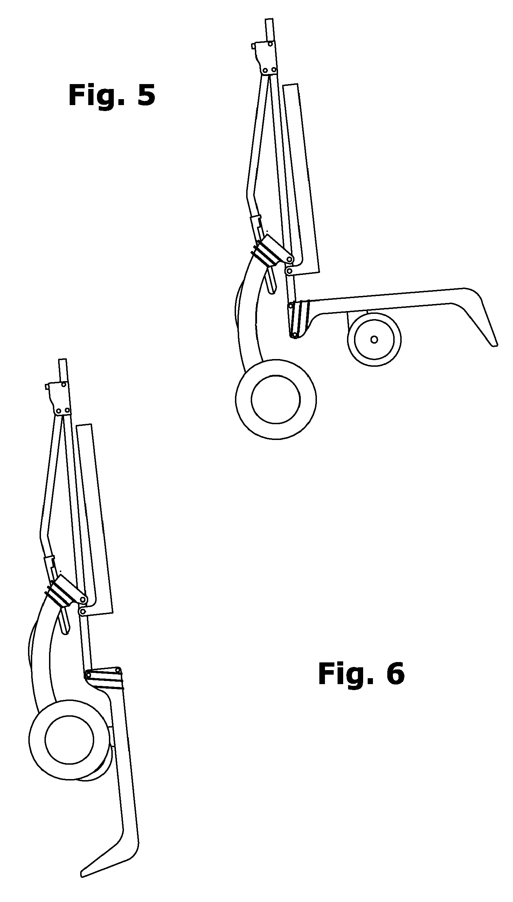

- Figure 5: shows a schematic side view of the trolley similar to that of Figure 4, but in a third stage in which the support for the rear wheels has been folded over the frame that supports this;
- Figure 6: shows a schematic side view of a fourth stage in which the support for the front wheels is also folded up;

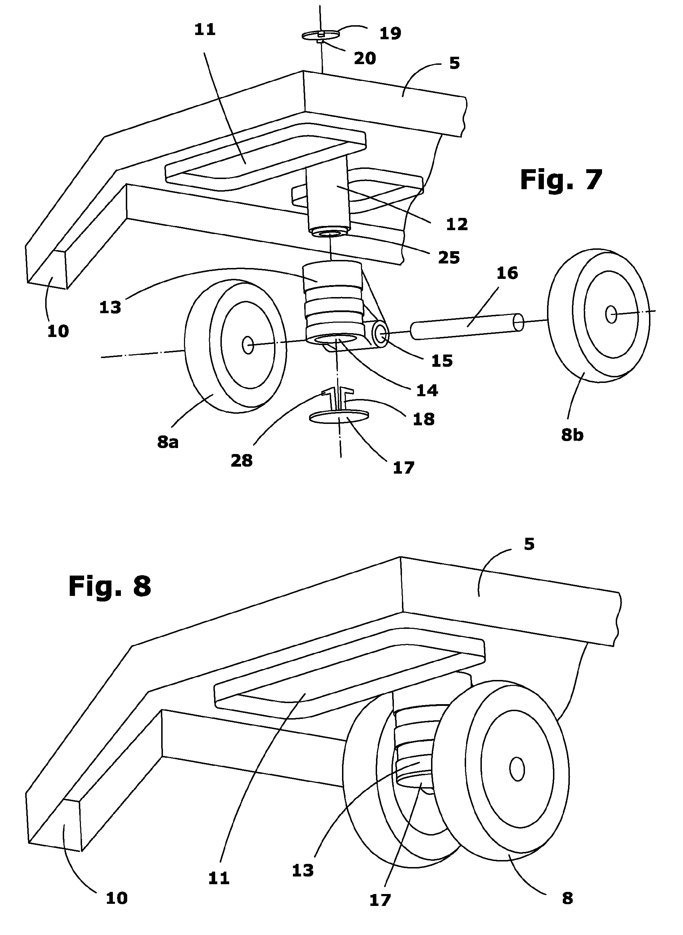

- Figure 7: shows an exploded schematic view of a detail of the mounting of the front wheels (on a single side) on their corresponding support); and
- Figure 8: shows a schematic perspective view similar to the one in Figure 7, but with the set of the wheel parts fitted.

### Detailed description of the invention with reference to the figures

As has already been stated, the invention consists of a shopping trolley which is able to hold a shopping bag, which is fitted with a frame (1) on which the other items are placed. This frame can constitute a single part with the handle, or said handle (2) can be a part that can be folded down by means of a joint in respect of said frame (1). In the event of the handle (2) being articulated in respect of the frame (1) it is intended for the articulation system to be by means of an articulation box (3), in which both parts, frame (1) and handle (2) are able to be secured in at least one unfolded position, and which has a manual release mechanism. The handle preferably has a trim cover (9), which also makes it more comfortable for the user.

On the frame (1) a platform (4) for supporting a bag is secured in an articulated system. This platform (4) comprises fins (22), in which there is an articulation axis (23), which is moved up (in the unfolded, usage position) in respect of the support surface of said bag. These fins (22) form grooves (21) able to partially envelope the tubes which form the frame (1), and thus hold the platform (4) to the frame (1) by means of this snap-fit securing system.

At the rear there is a support section (6) for rear wheels (7). The wheels are preferably located on both sides of the bottom end of said support section (6), so that through the support (6) being folded onto the frame (1) the wheels (8) are located on the outer sides of this frame (1). Like the platform (4) for supporting the bag, the support section for the rear wheels also includes grooves, although in this case, the articulation axis (24) of this support section (6) is located at the bottom of the corresponding channel (not shown).

The front part, under the bag support, also has a support section (5) for the front wheels (8). This support section (5) for the front wheels (8) is also articulated in respect of the frame (1), and includes grooves (26) secured by a snap-fit system to said frame (1) in the unfolded position, and has its articulation axis (27) at the bottom of said grooves (26). The support section (5) for the front wheels (8) is preferably fitted with front projections (10) like support legs, but which due to the support being provided on the front (8) and rear wheels (7), do not have this support function, but provides this support section (5) with greater structural solidity and a more attractive appearance for the user, at the same time as softening its sharp edges, minimising the risk of harm for said user or for any other through any accidental impact.

The support section (5) of the front wheels (8) preferably comprises weight-reduction windows (11) and structural support, between which or beside which there are cylindrical bodies (12) emerging towards the bottom securing part of said front wheels. If there are no such windows, the cylindrical bodies (12) will be located under the bottom surface of said support section (5). These cylindrical bodies (12) are hollow and comprise a narrowing (25) at their bottom end. Each of the cylindrical bodies (12) is able to house a wheel-carrying part on the outside (13), which has a cylindrical hollow (14), coinciding with said cylindrical body (12) and which enables free rotation in respect of this. At the bottom (in the usage position) and eccentrically, the wheel-holding part (13) comprises a housing (15) for an axle (16) of at least one wheel (8) and preferably a pair of wheels (8a, 8b). After the wheel-holding part (13) is fitted on the cylindrical body (12) the wheel-holding part (13) is secured by inserting a securing part (17), into the cylindrical body (12). This is inserted by a snap-fit system from the bottom (in the extended, usage position). The securing part (17) comprises legs (18) with edges (28), which will be held in the narrowing (25) of the cylindrical body (12). Each cylindrical body (12) leaves a space at the top of the support section (6) of the front wheels (8). This space can be covered by means of a plug (19) fitted with snap-fit means (20) for securing this in said space.

## Claims

1. A shopping trolley able to hold a shopping bag, which is fitted with a frame (1) in which the other items are fitted, and which comprises at least a support for rear wheels (7) which can be folded up onto said frame (1), a support platform for the bag (4), that can also fold up onto said frame, and a support section (5) for front wheels (8) also foldable onto the frame (1) on which this is articulated, **characterised in that** the front wheels (6) are set under this support section, and their rotation axis (16) has a variable position.

2. A shopping trolley, according to claim 1, **characterised in that** the support section (5) for the front wheels (8) comprises cylindrical bodies (12) emerging towards the bottom, for securing said front wheels (8).

3. A shopping trolley, according to claim 2, **characterised in that** each of the cylindrical bodies (12) is able to house a wheel-carrying part (13) on the outside. This wheel-carrying part (13) has a cylindrical hollow (14), concordant with said cylindrical body (12) and which allows free rotation in respect of this.

4. A shopping trolley, according to claim 3, **characterised in that** the wheel-carrying part (13) comprises at the bottom a housing (15) for an axle (16) of at least one wheel (8), this housing (15) being set eccentrically in respect of the geometrical axis of the cylindrical hollow (14) and of the cylindrical body (12).

5. A shopping trolley, according to claim 4, **characterised in that** each axle (16) holds a pair of wheels (8a, 8b).

6. A shopping trolley, according to any of claims 2 to 5, **characterised in that** the cylindrical body (12) is hollow and comprises a narrowing (25) at its bottom end.

7. A shopping trolley, according to claim 6, **characterised in that** it also comprises a securing part (17) for the wheel-carrying part (13), this securing part (17) being able to be inserted by snap-fitting into the cylindrical body (12), and **in that** the securing part (17) comprises legs (18) with edges (28) that can be secured in the narrowing (25) of the cylindrical body (12).

8. **A shopping trolley, according to any of claims 2 to 7, characterised in that** the cylindrical body (12) leaves a space at the top part of the support section (6) of the front wheels (8), and **in that** it also comprises a plug (19) fitted with elastic means (20) for being secured in said space.

9. A shopping trolley, according to any of claims 1 to 8, **characterised in that** the support section (5) for the front wheels (8) comprises windows (11).

10. A shopping trolley, according to any of claims 1 to 9, **characterised in that** the bag support platform, the support section (6) of the rear wheels (7), and the support section (5) of the front wheels (8) comprise grooves (21, 26) for snap-fit securing to said frame (1) in the extended position.

11. A shopping trolley, according to any of claims 1 to 9, **characterised in that** the support section (5) for the front wheels (8) has its articulation axis (27) in respect of the frame (1) set in the bottom part of the grooves (26).

12. A shopping trolley, according to any of claims 1 to 11, **characterised in that** the support section (5) for the front wheels (8) is fitted with front protection projections (10).

13. A shopping trolley, according to any of claims 1 to 12, **characterised in that** the handle (2) is articulated in respect of the frame (1), the articulation being achieved by means of an articulation box (3), in which both parts, the frame (1) and handle (2) are able to be fixed in at least one extended position, and which has a manual release mechanism.

14. A shopping trolley, according to any of claims 1 to 13, **characterised in that** the rear wheels (7) are located at both sides of the bottom end of said support section (6), so that when the support (6) is folded up on the frame (1) the wheels (8) are located at the outer sides of said frame (1).
